# EUROPÄISCHE PATENTSCHRIFT

(11) **EP 4 186 823 B1**
(45) Veröffentlichungstag und Bekanntmachung des Hinweises auf die Patenterteilung: **07.05.2025**
(21) Anmeldenummer: 22208061.6
(22) Anmeldetag: 17.11.2022
(51) Int. Cl.: B65G 1/04, E06B 9/08

(54) **WARENÜBERGABESCHLEUSE**
GOODS TRANSFER LOCK
SAS DE TRANSFERT DE MARCHANDISES

(30) Priorität: 29.11.2021 DE 102021131274
(43) Veröffentlichungstag der Anmeldung: 31.05.2023
(73) Patentinhaber: Brühl Safety GmbH, 57250 Netphen (DE)
(72) Erfinder: Fitz, Martin, 9434 Au (CH)
(74) Vertreter: Dr. Weitzel & Partner

(56) Entgegenhaltungen:
- EP-A1- 0 956 907
- DE-U1- 202017 105 723
- DE-U1- 29 817 574
- DE-U1- 8 115 421

## Beschreibung

Die vorliegende Erfindung betrifft eine Warenübergabeschleuse gemäß dem Oberbegriff von Anspruch 1.

Gattungsgemäße Warenübergabeschleusen werden in der Praxis beispielsweise dafür verwendet, dass in einem Kommissionierungssystem von einem Roboter, insbesondere einem Lagerregalbedienungsgerät, Ware zusammengestellt und in der Warenübergabeschleuse zur Weiterverwendung durch einen Benutzer oder ein anderes automatisiertes System bereitgestellt wird. Beispielsweise wird die Warenübergabeschleuse durch den Roboter von hinten bestückt und das weitere System oder der Nutzer können die Waren von vorne aus der Warenübergabeschleuse entnehmen. Um eine Kollision der beiden Systeme oder des Benutzers mit dem Roboter auszuschließen, weist die Warenübergabeschleuse eine erste Zugriffsöffnung auf einer ersten Seite eines in einem Gehäuse eingeschlossenen Aufnahmeraumes und eine zweite Zugriffsöffnung auf einer zur ersten Seite entgegengesetzten zweiten Seite des Aufnahmeraumes auf. Damit die erste Zugriffsöffnung und die zweite Zugriffsöffnung zur Kollisionsvermeidung innerhalb des Aufnahmeraumes wechselseitig überdeckt werden können, wobei die erste Zugriffsöffnung immer dann geöffnet ist, wenn die zweite Zugriffsöffnung geschlossen ist und umgekehrt, ist eine Jalousie vorgesehen, die von der ersten Seite des Aufnahmeraumes auf die zweite des Aufnahmeraumes und zurück verschiebbar ist und entsprechend in seitlichen Führungsschienen verschiebbar gehalten wird.

Herkömmlich ist die verschiebbare Jalousie aus Aluminiumprofilen hergestellt, die aufgrund ihrer Steifigkeit Schubkräfte aufeinander übertragen können, sodass der gewünschte Verschiebevorgang mit der wahlweisen Abdeckung jeweils einer Zugriffsöffnung durch Aufbringen einer verschiebenden Kraft auf eine beliebige Lamelle erreicht wird.

Nachteilig an der bekannten Ausführungsform ist, dass die Jalousie vergleichsweise schwer ist und die Verschiebung mit vergleichsweise großen Widerstandskräften einhergeht. Zudem ist die Herstellung einer solchen Warenübergabeschleuse vergleichsweise teuer.

DE 198 21 338 A1 offenbart ein Transportsystem und ein Verfahren zum Transportieren von Gegenständen in einen Arbeitsraum hinein oder aus einem Arbeitsraum heraus, wobei ein transportabler Behälter mit einer verschließbaren Zugangsöffnung und einem Andockbereich vorgesehen ist, der in einer Außenwand des Arbeitsraums integriert ist und eine verschließbare Andocköffnung aufweist, wobei der transportable Behälter von der Außenseite des Arbeitsraums her so mit dem Andockbereich verbindbar ist, dass bei geöffneter Zugangsöffnung und geöffneter Andocköffnung der Innenraum des Behälters von dem Arbeitsraum aus zugänglich und von dem Außenraum des Arbeitsraums getrennt ist.

DE 295 17 909 U1 offenbart eine Personen- und Materialschleuse für von der Umwelt abgeschlossener Arbeitsbereiche. Die Schleuse wird durch Rolltore verschlossen.

EP 2 300 680 B1 offenbart eine Verschlusseinrichtung in Form eines Tores.

Der vorliegenden Erfindung liegt die Aufgabe zugrunde, eine Warenübergabeschleuse der dargestellten Art dahingehend zu verbessern, dass die Verschiebung der Jalousie besonders widerstandsarm und schnell durchgeführt werden kann und die Herstellung der Warenübergabeschleuse kostengünstiger erfolgen kann.

Die erfindungsgemäße Aufgabe wird durch eine Warenübergabeschleuse mit den Merkmalen von Anspruch 1 gelöst. In den abhängigen Ansprüchen werden vorteilhafte und besonders zweckmäßige Ausgestaltungen der Erfindung angegeben.

Eine erfindungsgemäße Warenübergabeschleuse weist ein Gehäuse auf, das einen Aufnahmeraum umschließt. Auf einer ersten Seite des Aufnahmeraumes ist eine erste Zugriffsöffnung vorgesehen und auf einer zweiten Seite des Aufnahmeraumes, die der ersten Seite entgegengesetzt ist, ist eine zweite Zugriffsöffnung vorgesehen. Somit kann der Aufnahmeraum wechselseitig bedient werden.

Erfindungsgemäß ist eine von der ersten Seite des Aufnahmeraumes auf die zweite des Aufnahmeraumes und zurück umlenkbare Jalousie vorgesehen, mit welcher wechselseitig die erste Zugriffsöffnung und die zweite Zugriffsöffnung verschließbar sind, wobei die Jalousie in seitlichen Führungsschienen verschiebbar aus einer die erste Zugriffsöffnung überdeckenden Position in eine die zweite Zugriffsöffnung überdeckende Position und zurück gelagert ist.

Erfindungsgemäß ist die Jalousie aus einer flexiblen, die Zugriffsöffnungen wechselseitig flächig abdeckenden Folie hergestellt.

Eine solche erfindungsgemäße Folie ermöglicht ein besonders leichtes Verschieben der Jalousie, wobei die Verschiebebewegungen mit vergleichsweise großen Geschwindigkeiten durchgeführt werden können. Bevorzugt erstreckt sich die Folie von einem ersten unteren Ende auf der ersten Seite des Aufnahmeraumes über eine Oberseite des Aufnahmeraumes hinweg bis zu einem zweiten unteren Ende auf der zweiten Seite des Aufnahmeraumes, wobei die Folie besonders bevorzugt in ihrer Verschieberichtung, insbesondere vom ersten unteren Ende bis zum zweiten unteren Ende, permanent verspannt ist.

Das Verspannen der Folie kann beispielsweise durch Zugfedern erreicht werden, die am ersten unteren Ende und am zweiten unteren Ende angeschlossen sind und das erste unteren Ende und das zweite untere Ende nach unten ziehen.

Gemäß einer alternativen besonders günstigen Ausführungsform, die eine besonders lange Lebensdauer aufweist und ohne solche Zugfedern auskommen kann, ist die Folie am ersten unteren Ende und am zweiten unteren Ende jeweils mit einem Gegengewicht versehen, welches jeweils eine Zugspannung nach unten auf das entsprechende Ende aufbringt. Damit kann zum einen die gewünschte Verspannung der Folie vom ersten unteren Ende bis zum zweiten unteren Ende erreicht werden. Zum anderen kann durch das Vorsehen von Gegengewichten an beiden unteren Enden ein Gewichtsausgleich erreicht werden, der das Verschieben der Jalousie mit besonders geringen Kräften ermöglicht.

Die Lösungen mit Gegengewicht und Zugfeder können auch miteinander kombiniert werden, entweder indem an einem unteren Ende ein Gegengewicht vorgesehen ist und an dem anderen unteren Ende wenigstens eine Zugfeder angreift oder indem an einem unteren Ende oder an beiden unteren Enden wenigstens ein Gegengewicht und wenigstens eine Zugfeder vorgesehen sind.

Besonders bevorzugt weist die Folie an ihrem ersten unteren Ende und an ihrem zweiten unteren Ende jeweils eine starre Abschlussleiste, insbesondere mit einem Griffelement, auf. Bei dem Griffelement kann es sich beispielsweise um einen Bügelgriff oder auch um einen in die Abschlussleiste integrierten Griff handeln. Somit kann ein Nutzer leicht an der Abschlussleiste greifen, um diese nach oben oder nach unten zu schieben und damit die gesamte Jalousie entsprechend geführt in den Führungsschienen zu verschieben, um wahlweise die erste oder die zweite Zugriffsöffnung freizugeben.

Das Gegengewicht und/oder die wenigstens eine Zugfeder kann an der Abschlussleiste angreifen. Gemäß einer Ausführungsform ist das Gegengewicht in die Abschlussleiste integriert, die demnach eine solche Masse aufweist, dass die gewünschte Verspannung der Folie auch beim Verschieben erreicht wird.

Gemäß einer Ausführungsform der Erfindung ist an wenigstens einer Abschlussleiste oder sind an beiden Abschlussleisten, insbesondere im Bereich innerhalb einer seitlichen Führungsschiene oder in beiden seitlichen Führungsschienen, (jeweils) ein Anschlag für einen Endlagendämpfer vorgesehen, der insbesondere (jeweils) im Bereich eines oberen Endes der ersten Seite und/oder der zweiten Seite des Aufnahmeraumes angeordnet ist. Damit wird das Verschieben der Jalousie in die jeweilige Endlage gedämpft, was entsprechende Stöße vermeidet.

Bei dem Endlagendämpfer kann es sich um einen mechanischen und/oder hydraulischen Endlagendämpfer handeln. Prinzipiell kann ein solcher Endlagendämpfer auch an einer oder beiden Abschlussleisten vorgesehen sein und mit einem entsprechenden Anschlag im Bereich des oberen Endes der ersten Seite und/oder zweiten Seite des Aufnahmeraumes zusammenarbeiten.

Besonders günstig ist, wenn im Bereich der Oberseite des Aufnahmeraumes Umlenkwalzen vorgesehen sind, welche die Jalousie abwälzend und/oder gleitend tragen. Im ersten Fall laufen die Umlenkwalzen entsprechend um, im zweiten Fall könnten sie nicht umlaufend befestigt sein.

Um den Aufnahmeraum sicher vor ungewollten Zugriffen zu schützen, kann das Gehäuse auf einander gegenüberliegenden Außenseiten, die den Aufnahmeraum zusammen mit der ersten Seite und der zweiten Seite vollumfänglich umschließen, verschlossen sein. Insbesondere sind die Außenseiten mit einer starren Wand verschlossen.

Besonders günstig ist die Jalousie formschlüssig gegen Herausziehen in den seitlichen Führungsschienen gesichert. Dies kann beispielsweise dadurch erreicht werden, dass die Jalousie in innerhalb der Führungsschienen positionierten Randbereichen in der Verschieberichtung mit Abstand zueinander angeordnete Vorsprünge, beispielsweise in Form von Knöpfen in der Folie, aufweist.

Die erfindungsgemäße Warenübergabeschleuse kann mit einer Jalousie versehen sein, die aufgrund ihres Materials zwar prinzipiell aufwickelfähig ist, die jedoch bevorzugt nur umgelenkt, aber nicht aufgewickelt wird. Das bedeutet, es liegen nicht verschiedene Bereiche der Jalousie aufeinander auf.

Ferner kommt die erfindungsgemäße Warenübergabeschleuse bevorzugt ohne automatisierte Antriebsvorrichtung aus, das heißt, die Jalousie ist allein aufgrund einer Handbetätigung verschiebbar.

Prinzipiell kann die Jalousie jedoch auch automatisiert verschoben werden, indem ein entsprechender automatischer Antrieb, insbesondere elektromotorischer Antrieb, vorgesehen ist, der an der Jalousie oder an den Abschlussleisten angreift.

Die Erfindung soll nachfolgend anhand eines Ausführungsbeispiels und den Figuren exemplarisch beschrieben werden.

Es zeigen:
- Figur 1: eine Warenübergabeschleuse in einer Draufsicht schräg auf die erste Seite des Aufnahmeraumes im Gehäuse;
- Figur 2: eine entsprechende Ansicht schräg auf die zweite Seite des Aufnahmeraumes;
- Figur 3: eine Ansicht von unten in eine Führungsschiene;
- Figur 4: eine geschnittene Ansicht durch den Bereich mit der Oberseite des Aufnahmeraumes;
- Figur 5: eine weitere geschnittene Ansicht durch den Bereich der Oberseite des Aufnahmeraumes.

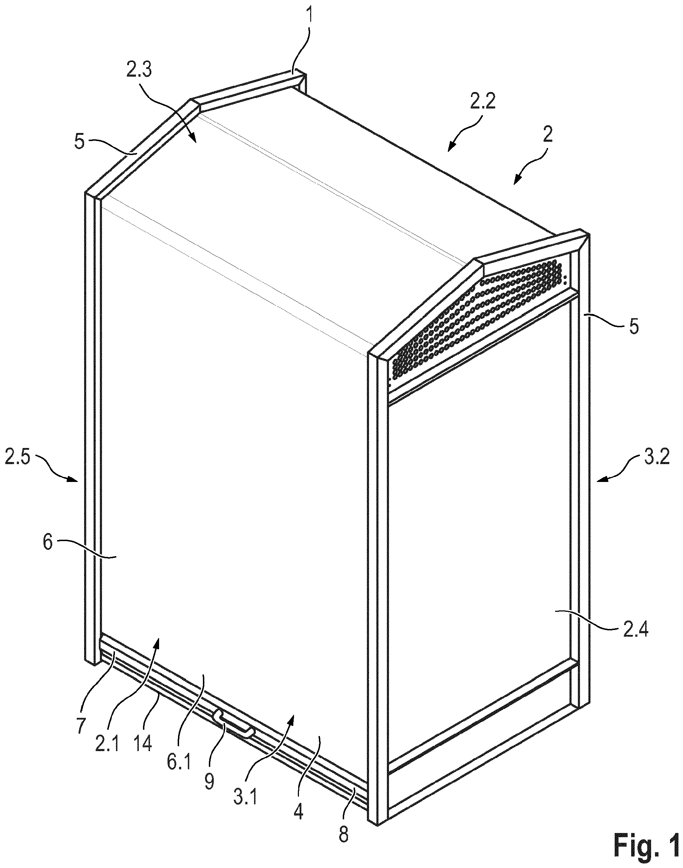

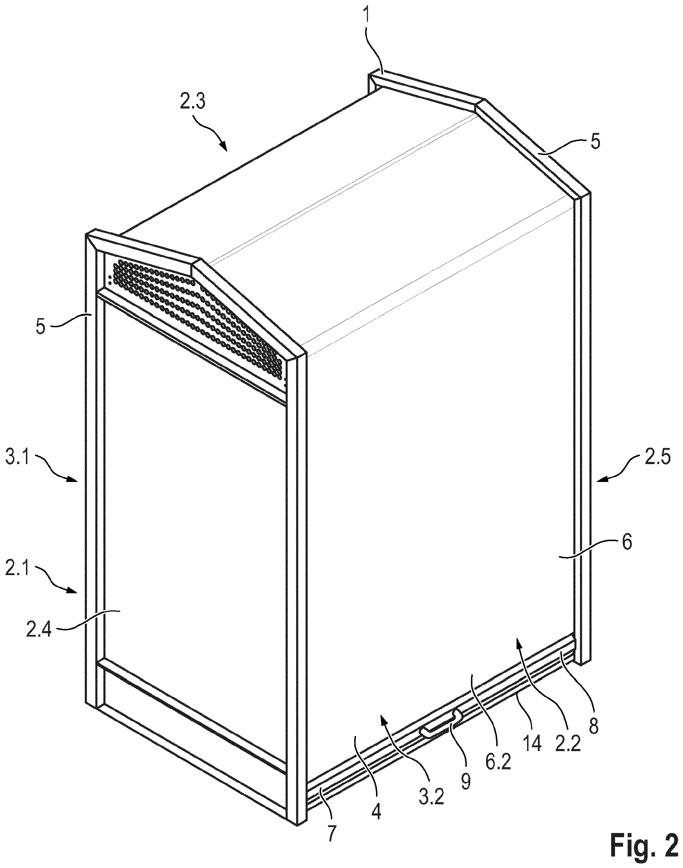

In den Figur 1 und 2 ist eine Warenübergabeschleuse dargestellt, bei welcher das Gehäuse 1 einen Aufnahmeraum 2 auf allen Seiten (bis auf den Boden) umschließt, wobei eine Vorderseite - erste Seite 2.1 -, eine Oberseite 2.3 und eine Rückseite - zweite Seite 2.2 - durch eine Jalousie 4 abgedeckt werden können. Die Jalousie 4 erstreckt sich dabei von der ersten Seite 2.1 über die Oberseite 2.3 hinweg auf die zweite Seite 2.2 und weist eine solche Länge auf, dass sie, wenn sie die erste Zugriffsöffnung 3.1 des Aufnahmeraumes 2 vollständig freigibt, gleichzeitig die zweite Zugriffsöffnung 3.2 auf der entgegengesetzten Seite vollständig verschließt. Die erste Zugriffsöffnung 3.1 ist auf der ersten Seite 2.1 angeordnet und die zweite Zugriffsöffnung 3.2 ist auf der zweiten Seite 2.2 angeordnet.

In der Figur 1 ist die Warenübergabeschleuse in einem Zustand gezeigt, in dem die erste Zugriffsöffnung 3.1 von der Jalousie 4 vollständig überdeckt wird, und in der Figur 2 ist die Warenübergabeschleuse in einem Zustand gezeigt, in dem die zweite Zugriffsöffnung 3.2 von der Jalousie 4 vollständig überdeckt wird.

Der Aufnahmeraum 2 weist ferner zwei einander gegenüberstehende Außenseiten 2.4 und 2.5 auf, auf denen er dauerhaft durch jeweils eine Wand verschlossen ist.

Die Jalousie 4 wird durch eine Folie 6 gebildet, die seitlich in Führungsschienen 5 verschiebbar geführt wird und die an jedem freien Ende, das heißt am ersten unteren Ende 6.1 und am zweiten unteren Ende 6.2, mit einer Abschlussleiste 8 versehen ist, die ein Gegengewicht 7 umfasst oder ausbildet. Die Abschlussleisten 8 weisen jeweils ein Griffelement 9 auf, hier in Form eines Bügelgriffes, sodass ein Benutzer an jeweils einer der beiden Abschlussleisten 8 greifen kann, um diese nach oben oder nach unten zu verschieben. Aufgrund der Gegengewichte 7 an beiden unteren Enden 6.1, 6.2 bewirkt ein nach oben Schieben einer Abschlussleiste 8 auf einer Seite 2.1, 2.2 ein Herunterfahren der entsprechend anderen Abschlussleiste 8 auf der entgegengesetzten Seite 2.1, 2.2. Die Gegengewichte 7 sind ausreichend dimensioniert, um die Folie 6 vom ersten unteren Ende 6.1 bis zum zweiten unteren Ende 6.2 ständig unter Zugspannung zu halten.

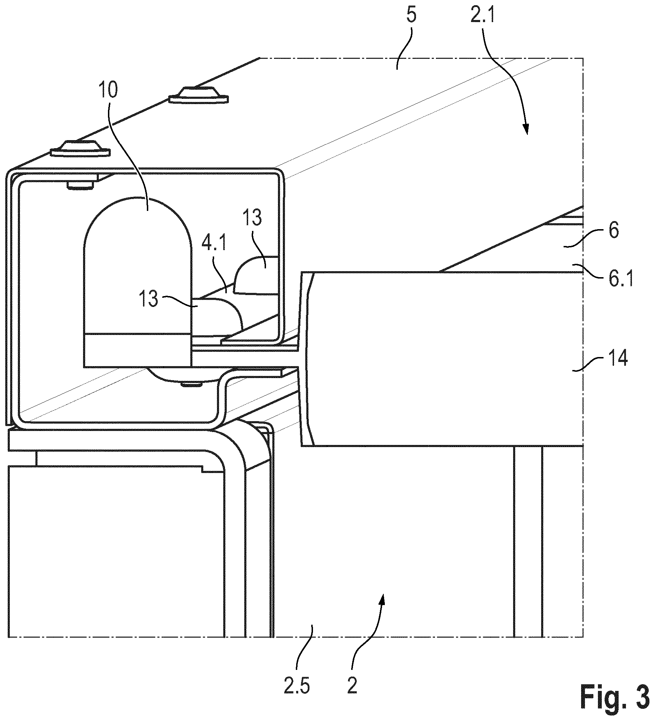

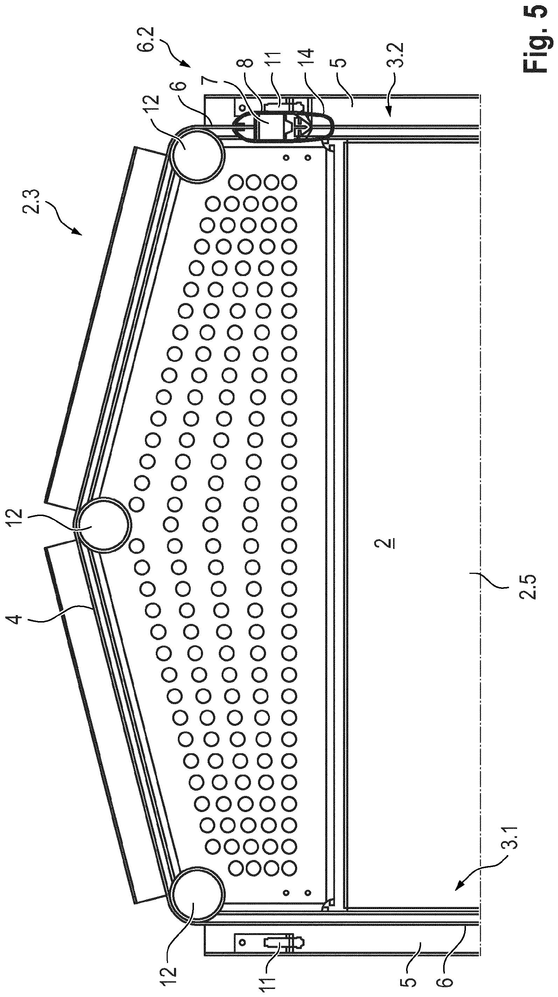

Wie sich besonders aus den Figuren 3 und 5 ergibt, sind die Randbereiche 4.1 der Jalousie 4, das heißt entsprechende Randbereiche der Folie 6, innerhalb der seitlichen Führungsschienen 5 positioniert und werden dort formschlüssig, aber verschiebbar gehalten. Im gezeigten Ausführungsbeispiel, jedoch nicht zwingend, wird der Formschluss durch in der Verschieberichtung mit Abstand zueinander angeordnete Vorsprünge 13 erreicht, die eine Hinterschneidung mit den Führungsschienen 5 ausbilden. Ferner ist im Bereich des ersten unteren Endes 6.1 und im Bereich des zweiten unteren Endes 6.2, bevorzugt an den Abschlussleisten 8, ein Anschlag 10 vorgesehen, der mit einem Endlagendämpfer 11 in der Führungsschiene 5 im Bereich der Oberseite 2.3 des Aufnahmeraumes 2 zusammenarbeitet, um den Anschlag der Jalousie 4 in ihren beiden Endlagen zu dämpfen.

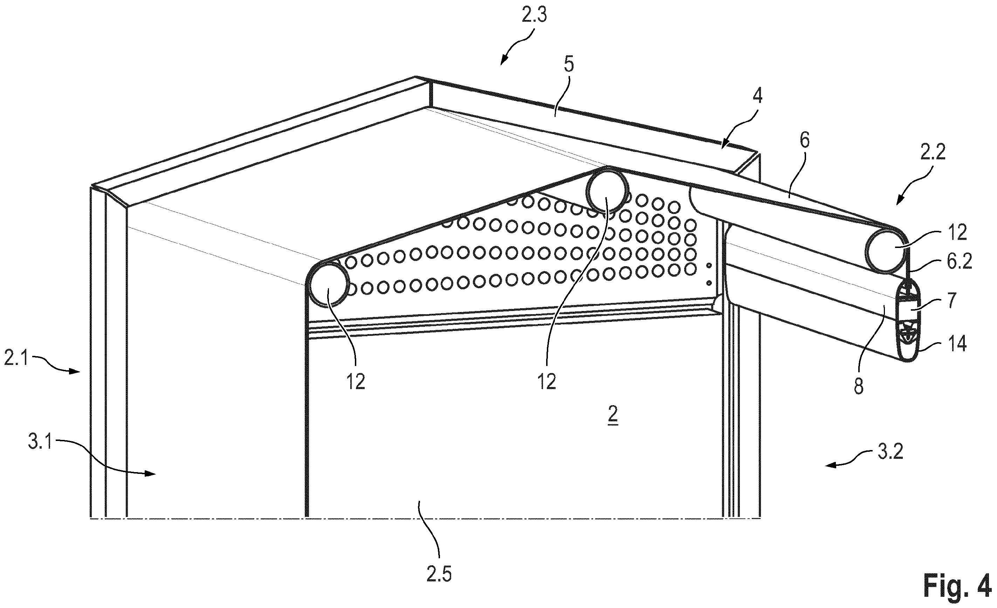

Besonders aus den Figuren 4 und 5 sind die Umlenkwalzen 12 im Bereich der Oberseite 2.3 des Aufnahmeraumes 2 entnehmbar, über welche die Folie 6 beim Verschieben der Abschlussleisten 8 vertikal nach oben und nach unten läuft. Diese Umlenkwalzen 12 weisen bevorzugt keinen Antrieb auf, sondern dienen nur dem Führen der Jalousie 4.

Im gezeigten Ausführungsbeispiel sind die Abschlussleisten 8 auf ihrer Unterseite mit einer Dichtung 14 versehen. Dies ist jedoch nicht zwingend.

Das Gehäuse 1 weist eine Rahmenstruktur auf, sodass es in Leichtbauweise hergestellt werden kann. Das Gehäuse 1 kann beispielsweise auf einem Boden verschraubt werden.

### Bezugszeichenliste

- 1: Gehäuse
- 2: Aufnahmeraum
- 2.1: erste Seite
- 2.2: zweite Seite
- 2.3: Oberseite
- 2.4: Außenseite
- 2.5: Außenseite
- 3.1: erste Zugriffsöffnung
- 3.2: zweite Zugriffsöffnung
- 4: Jalousie
- 4.1: Randbereich
- 5: Führungsschiene
- 6: Folie
- 6.1: erstes unteres Ende
- 6.2: zweites unteres Ende
- 7: Gegengewicht
- 8: Abschlussleiste
- 9: Griffelement
- 10: Anschlag
- 11: Endlagendämpfer
- 12: Umlenkwalze
- 13: Vorsprung
- 14: Dichtung

## Patentansprüche

1. Warenübergabeschleuse
mit einem Gehäuse (1), das einen Aufnahmeraum (2) umschließt;
mit einer ersten Zugriffsöffnung (3.1) auf einer ersten Seite (2.1) des Aufnahmeraumes (2) und einer zweiten Zugriffsöffnung (3.2) auf einer zweiten, der ersten Seite (2.1) entgegengesetzten Seite (2.2) des Aufnahmeraumes (2);
mit einer von der ersten Seite (2.1) des Aufnahmeraumes (2) auf die zweite Seite (2.2) des Aufnahmeraumes (2) und zurück umlenkbaren Jalousie (4), mit der wechselseitig die erste Zugriffsöffnung (3.1) und die zweite Zugriffsöffnung (3.2) verschließbar sind, wobei die Jalousie (4) in seitlichen Führungsschienen (5) verschiebbar aus einer die erste Zugriffsöffnung (3.1) überdeckenden Position in eine die zweite Zugriffsöffnung (3.2) überdeckende Position und zurück gelagert ist;
**dadurch gekennzeichnet, dass**
die Jalousie (4) aus einer flexiblen, die Zugriffsöffnungen (3.1, 3.2) wechselseitig flächig abdeckenden Folie (6) hergestellt ist.

2. Warenübergabeschleuse gemäß Anspruch 1, **dadurch gekennzeichnet, dass** sich die Folie (6) von einem ersten unteren Ende (6.1) auf der ersten Seite (2.1) des Aufnahmeraumes (2) über eine Oberseite (2.3) des Aufnahmeraumes (2) bis zu einem zweiten unteren Ende (6.2) auf der zweiten Seite (2.2) des Aufnahmeraumes (2) erstreckt.

3. Warenübergabeschleuse gemäß einem der Ansprüche 1 oder 2, **dadurch gekennzeichnet, dass** die Folie (6) in ihrer Verschieberichtung, insbesondere vom ersten unteren Ende (6.1) bis zum zweiten unteren Ende (6.2), verspannt ist.

4. Warenübergabeschleuse gemäß Anspruch 3, **dadurch gekennzeichnet, dass** die Folie (6) am ersten unteren Ende (6.1) und am zweiten unteren Ende (6.2) jeweils mit einem Gegengewicht (7) versehen ist.

5. Warenübergabeschleuse gemäß einem der Ansprüche 1 bis 4, **dadurch gekennzeichnet, dass** die Folie (6) an ihrem ersten unteren Ende (6.1) und an ihrem zweiten unteren Ende (6.2) jeweils eine starre Abschlussleiste (8, insbesondere mit einem Griffelement (9), aufweist.

6. Warenübergabeschleuse gemäß Anspruch 5, **dadurch gekennzeichnet, dass** wenigstens eine oder beide Abschlussleisten (8), insbesondere im Bereich innerhalb einer seitlichen Führungsschiene (5), einen Anschlag (10) für einen Endlagendämpfer (11) aufweist/aufweisen, der insbesondere im Bereich eines oberen Endes der ersten Seite (2.1) und/oder der zweiten Seite (2.2) des Aufnahmeraumes (2) angeordnet ist.

7. Warenübergabeschleuse gemäß einem der Ansprüche 2 bis 6, **dadurch gekennzeichnet, dass** im Bereich der Oberseite (2.3) des Aufnahmeraumes (2) Umlenkwalzen (12) vorgesehen sind, welche die Jalousie (4) abwälzend und/oder gleitend tragen.

8. Warenübergabeschleuse gemäß einem der Ansprüche 1 bis 7, **dadurch gekennzeichnet, dass** das Gehäuse (1) auf einander gegenüberliegenden Außenseiten (2.4, 2.5), die den Aufnahmeraum (2) zusammen mit der ersten Seite (2.1) und der zweiten Seite (2.2) vollumfänglich umschließen, verschlossen ist.

9. Warenübergabeschleuse gemäß einem der Ansprüche 1 bis 8, **dadurch gekennzeichnet, dass** die Jalousie (4) formschlüssig gegen Herausziehen in den seitlichen Führungsschienen (5) gesichert ist.

10. Warenübergabeschleuse gemäß Anspruch 9, **dadurch gekennzeichnet, dass** die Jalousie (4) in innerhalb der Führungsschienen (5) positionierten Randbereichen (4.1) in der Verschieberichtung mit Abstand zueinander angeordnete Vorsprünge (13) aufweist.

## Claims

1. Goods transfer lock,
having a housing (1) enclosing a receiving space (2);
having a first access opening (3.1) on a first side (2.1) of the receiving space (2) and a second access opening (3.2) on a second side (2.2) of the receiving space (2) which is opposite the first side (2.1);
having a shutter (4) which can be deflected from the first side (2.1) of the receiving space (2) onto the second side (2.2) of the receiving space (2) and back, with which the first access opening (3.1) and the second access opening (3.2) can be closed reciprocally, wherein the shutter (4) is mounted in lateral guide rails (5) such that it can be displaced out of a position covering the first access opening (3.1) into a position covering the second access opening (3.2) and back;
**characterized in that**
the shutter (4) is produced from a flexible film (6) which covers the access openings (3.1, 3.2) reciprocally in a planar manner.

2. Goods transfer lock according to claim 1, **characterized in in that** the film (6) extends from a first lower end (6.1) on the first side (2.1) of the receiving space (2) over an upper side (2.3) of the receiving space (2) up to a second lower end (6.2) on the second side (2.2) of the receiving space (2).

3. Goods transfer lock according to one of claims 1 or 2, **characterized in that** the film (6) is tensioned in its direction of displacement, in particular from the first lower end (6.1) to the second lower end (6.2).

4. Goods transfer lock according to claim 3, **characterized in that** the film (6) is provided with a counterweight (7) at each of the first lower end (6.1) and the second lower end (6.2).

5. Goods transfer lock according to one of claims 1 to 4, **characterized in that** the film (6) has in each case a rigid end strip (8), in particular with a handle element (9), at its first lower end (6.1) and at its second lower end (6.2).

6. Goods transfer lock according to claim 5, **characterized in** at least one or both end strips (8), in particular in the region within a lateral guide rail (5), has/have a stop (10) for an end-position damper (11) which is arranged in particular in the region of an upper end of the first side (2.1) and/or of the second side (2.2) of the receiving space (2).

7. Goods transfer lock according to one of claims 2 to 6, **characterized in that** deflecting rollers (12) are provided in the region of the upper side (2.3) of the receiving space (2), which rollers support the shutter (4) in a rolling and/or sliding manner.

8. Goods transfer lock according to one of claims 1 to 7, **characterized in that** the housing (1) is closed on opposite outer sides (2.4, 2.5) which, together with the first side (2.1) and the second side (2.2), completely enclose the receiving space (2) over the entire circumference.

9. Goods transfer lock according to one of claims 1 to 8, **characterized in that** the shutter (4) is secured in a form-fitting manner against being pulled out in the lateral guide rails (5).

10. Goods transfer lock according to claim 9, **characterized in that** the shutter (4) has, in edge regions (4.1) positioned inside the guide rails (5), projections (13) which are arranged at a distance from one another in the direction of displacement.

## Revendications

1. Sas de remise de marchandises
avec un coffre (1) qui renferme un logement (2) ;
avec une première ouverture d'accès (3.1) sur un premier côté (2.1) du logement (2) et une deuxième ouverture d'accès (3.2) sur un deuxième côté (2.2) du logement (2) opposé au premier côté (2.1) ;
avec un rideau (4) qui peut être déplacé du premier côté (2.1) du logement (2) au deuxième côté (2.2) du logement (2) et vice versa, avec lequel la première ouverture d'accès (3.1) et la deuxième ouverture d'accès (3.2) peuvent être fermées alternativement, le rideau (4) étant capable de translation dans des rails de guidage latéraux (5) d'une position couvrant la première ouverture d'accès (3.1) à une position couvrant la deuxième ouverture d'accès (3.2) et vice versa ;
**caractérisé en ce que**
le rideau (4) est fait d'un film (6) flexible recouvrant alternativement les ouvertures d'accès (3.1, 3.2) à plat.

2. Sas de remise de marchandises selon la revendication 1, **caractérisé en ce que** le film (6) s'étend d'une première extrémité inférieure (6.1) sur le premier côté (2.1) du logement (2) en passant par un côté supérieur (2.3) du logement (2) jusqu'à une deuxième extrémité inférieure (6.2) sur le deuxième côté (2.2) du logement (2).

3. Sas de remise de marchandises selon l'une des revendications 1 ou 2, **caractérisé en ce que** le film (6) est tendu dans le sens de sa translation, en particulier de la première extrémité inférieure (6.1) à la deuxième extrémité inférieure (6.2).

4. Sas de remise de marchandises selon la revendication 3, **caractérisé en ce que** le film (6) est muni d'un contrepoids (7) respectif sur la première extrémité inférieure (6.1) et sur la deuxième extrémité inférieure (6.2).

5. Sas de remise de marchandises selon l'une des revendications 1 à 4, **caractérisé en ce que** le film (6) comporte une barre de terminaison (8) respective, en particulier munie d'un élément de préhension (9), à sa première extrémité inférieure (6.1) et à sa deuxième extrémité inférieure (6.2).

6. Sas de remise de marchandises selon la revendication 5, **caractérisé en ce qu'**au moins une barre de terminaison (8) ou les deux présentent, en particulier à l'intérieur d'un rail de guidage latéral (5), une butée (10) pour un amortisseur de fin de course (11) qui est en particulier disposée au niveau d'une extrémité supérieure du premier côté (2.1) et/ou du deuxième côté (2.2) du logement (2).

7. Sas de remise de marchandises selon l'une des revendications 2 à 6, **caractérisé en ce que** sont prévus au niveau du côté supérieur (2.3) du logement (2) des rouleaux de renvoi (12) qui portent le rideau (4) de façon déroulante et/ou coulissante.

8. Sas de remise de marchandises selon l'une des revendications 1 à 7, **caractérisé en ce que** le coffre (1) est fermé sur des côtés extérieurs (2.4, 2.5) qui se font face et qui entourent complètement le logement (2) avec le premier côté (2.1) et le deuxième côté (2.2).

9. Sas de remise de marchandises selon l'une des revendications 1 à 8, **caractérisé en ce que** le rideau (4) est fixé dans les rails de guidage latéraux (5) en correspondance de forme pour empêcher son arrachement.

10. Sas de remise de marchandises selon la revendication 9, **caractérisé en ce que** le rideau (4) présente des saillies (13) disposées à distance les unes des autres dans le sens de translation dans des zones de bord (4.1) placées à l'intérieur des rails de guidage (5).
